# EUROPÄISCHE PATENTANMELDUNG

(11) **EP 1 666 125 A1**
(43) Veröffentlichungstag der Anmeldung: **07.06.2006**
(21) Anmeldenummer: 05019399.4
(22) Anmeldetag: 16.09.2005
(51) Int. Cl.: B01D 53/04, B60H 3/06, B01J 20/20, B01D 39/20

(54) **Adsorptionsfilter**

(30) Priorität: 02.12.2004 DE 102004058167
(71) Anmelder: Carl Freudenberg KG, 69469 Weinheim (DE)
(72) Erfinder: Bräunling, Volker, 64646 Heppenheim (DE); Stahl, Ulrich, 69514 Laudenbach (DE); Felber, Uwe, 69518 Absteinach (DE); Bader, Robert, 69117 Heidelberg (DE); Schacht, Heiko, 69493 Hirschberg (DE)

(57) **Zusammenfassung**

Ein Adsorptionsfilter mit wenigstens einer Schicht aus Aktivkohlepartikeln beschrieben, ist im Hinblick auf die Aufgabe einen Adsorptionsfilter der genannten Art so weiterzuentwickeln, dass er bei einem möglichst einfachen und kostengünstigen Aufbau eine gegenüber den herkömmlichen Filtern deutlich verbesserte Durchbruchcharakteristik aufweist, dadurch gekennzeichnet, dass wenigstens 20 Gewichts-% der Aktivkohlepartikel eine Partikelgröße von weniger als 0,180 mm aufweisen und das Gesamtflächengewicht an Aktivkohle zwischen 100 und 500 g/m² beträgt. Der erfindungsgemäße Adsorptionsfilter zeichnet sich durch eine hohe Spontanadsorptionsleistung aus.

## Beschreibung

### Technisches Gebiet

Die Erfindung betrifft einen Adsorptionsfilter mit wenigstens einer Schicht aus Aktivkohlepartikeln.

### Stand der Technik

In vielen Systemen, insbesondere in Kraftfahrzeugklimaanlagen, werden heute sogenannte Kombifilter eingesetzt. Hierbei handelt es sich um Partikelfilter zur Partikelabscheidung mit nachgeschalteter Aktivkohleschicht zur Adsorption von Gasen. Die Aktivkohleschicht besteht hierbei in der Regel aus Kornkohle, die an einen Träger, beispielsweise aus Vliesstoff, gebunden sein kann. Die verwendeten Partikelgrößen und Kohlemengen stellen dabei einen Kompromiß zwischen Adsorptionskapazität, Durchbruchcharakteristik und Luftdurchlässigkeit dar. Die Korngrößen der verwendeten Aktivkohlepartikel liegen üblicherweise im Bereich 20 x 60 mesh (Mesh size nach ASTM Designation D 2862 - 97). Dies entspricht Partikelgrößen zwischen 0,25 mm und 0,85 mm. Übliche Aufbringmengen an Aktivkohle pro Flächeneinheit liegen zwischen 250 - 500 g/m².

Aus dem Stand der Technik sind zahlreiche Vorschläge für die Verbesserung des Durchbruchverhaltens eines Adsorptionsfilters bekannt. In der Regel handelt es sich hierbei um Filteraufbauten, bei denen ein herkömmlicher Adsorptionsfilter mit Korn- oder Kugelkohle um einen Filterbereich mit hoher Spontanadsorption ergänzt wird.

So ist beispielsweise aus der DE 197 08 692 ein Adsorptionsfilter bekannt, welcher zur Verbesserung des Durchbruchverhaltens bei gleichzeitiger Beibehaltung einer möglichst hohen Luftdurchlässigkeit und einer möglichst hohen Adsorptionskapazität in zwei Filterbereiche unterteilt ist. Der erste Filterbereich soll bis zu 99 % der Schadstoffe aufnehmen und damit eine hohe Kapazität aufweisen. Der zweite Bereich soll eine nur geringe Kapazität, aber eine hohe Adsorptionsgeschwindigkeit besitzen. Für den ersten Bereich wird in der Schrift die Verwendung von körniger oder kugelförmiger Aktivkohle (Partikelgröße ca. 0.3 - 1.0 mm; Gesamtkohlemenge: ca. 400 - 500 g/m²) als Adsorbens vorgeschlagen, für den zweiten Bereich vorzugsweise textile Flächengebilde aus Aktivkohle.

Mit dem bekannten Filter soll eine sehr gute Durchbruchcharakteristik erzielbar sein. Nachteilig an diesem und den weiteren, in der Literatur vorgeschlagenen Filtern ist jedoch der in der Regel sehr komplexe und aufwändige Aufbau, der sich sowohl in den Material- als auch den Herstellungskosten niederschlägt.

### Darstellung der Erfindung

Aufgabe der Erfindung ist es, einen Adsorptionsfilter der eingangs genannten Art so weiterzuentwickeln, dass er bei einem möglichst einfachen und kostengünstigen Aufbau eine gegenüber den herkömmlichen Filtern deutlich verbesserte Durchbruchcharakteristik aufweist.

Diese Aufgabe wird gelöst mit einem Adsorptionsfilter mit den Merkmalen des Patentanspruchs 1. Vorteilhafte Ausgestaltungen der Erfindung sind in den Unteransprüchen beschrieben.

Erfindungsgemäß ist vorgesehen, dass bei einem Adsorptionsfilter, der wenigstens eine Schicht aus Aktivkohlepartikeln umfasst, wenigstens 20 Gewichts-% der Aktivkohlepartikel eine Partikelgröße von weniger als 0,180 mm aufweisen und das Gesamtflächengewicht an Aktivkohle zwischen 100 und 500 g/m² beträgt.

Der erfindungsgemäße Adsorptionsfilter weist eine sehr gute Durchbruchcharakteristik auf. Durch die Verwendung kleinerer Partikelgrößen konnte die Adsorptionsgeschwindigkeit wesentlich erhöht werden. Mit der Verringerung der Partikelgröße geht üblicherweise eine unerwünschte Verminderung der Luftdurchlässigkeit des Filtermediums einher. Dem wird erfindungsgemäß dadurch begegnet, dass die Menge an verwendeter Aktivkohle weit unter die üblicherweise verwendeten Mengen auf Kosten der Adsorptionskapazität herabsetzbar ist. Entgegen der im Stand der Technik herrschenden Meinung, dass ein Hochleistungsadsorptionsfilter neben einer guten Adsorptionsgeschwindigkeit auch noch eine möglichst hohe Adsorptionskapazität aufweisen muss, weshalb beispielsweise der aus der eingangs genannten DE 197 08 692 C2 bekannte Hochleistungsadsorptionsfilter sowohl einen Bereich mit hoher Adsorptionsgeschwindigkeit als auch einen Bereich mit hohem Aktivkohleanteil und damit hoher Adsorptionskapazität aufweist, haben die Erfinder erkannt, dass der Höhe der erreichbaren Adsorptionskapazität für die Funktion eines Filters nicht die Bedeutung zukommt, die man vermutet hatte.

Die Erfinder haben insbesondere erkannt, dass die im Straßenverkehr vorkommenden Schadgasbelastungen zumeist als nur kurzzeitige Konzentrationsspitzen auftreten, die durch einen schnell reagierenden Adsorptionsfilter mit hoher Spontanadsorption sehr gut eliminiert werden können, wobei die Adsorptionskapazität eine nur untergeordnete Rolle spielt. Weiterhin hat sich im Rahmen von Dauerlauftests und subjektiven Leistungsbeurteilungen (DIN 10950: "sensorisches Training" und DIN 13725: "Olfaktometrie") von Kombifiltern mit herkömmlichen Adsorptionsfiltern gezeigt, dass die Höhe der Adsorptionskapazität nach DIN 71460/2 kein Maß für die Filterstandzeit bzw. die subjektive Geruchsminderungseigenschaft von Kombifiltern darstellt.

Erfindungsgemäß wurde schließlich erkannt, dass schon eine Erhöhung des Anteils an Aktivkohlepartikeln auf 20 Gewichts-%, die kleiner als 0,180 mm sind, zu einer nennenswerten Verbesserung der Spontanadsorption führt. Hierbei beträgt erfindungsgemäß das Gesamtflächengewicht an Aktivkohle zwischen 100 und 500 g/m². Diese Werte stellen einen Kompromiß zwischen einer guten Luftdurchlässigkeit des Filtermediums und einer ausreichenden Adsorptionskapazität dar. Unterschreitet das Gesamtflächengewicht an Aktivkohle einen Wert von 100 g/m², so ist die Kontaktwahrscheinlichkeit der zu adsorbierenden Moleküle mit der Aktivkohle zu gering. Als Folge davon verschlechtert sich die Adsorptionsleistung des Filters und es könnte der Effekt des Channeling auftreten. Wird dagegen die obere Grenze von 500 g/m² überschritten, so verschlechtert sich die Luftdurchlässigkeit des Filtermediums zu stark.

Der Kern der Erfindung liegt in der geeigneten Wahl der Mischung der Aufbringmenge aus Feinanteil und Grobanteil an Aktivkohle derart, dass eine hohe Adsorptionsgeschwindigkeit bei möglichst guter Luftdurchlässigkeit und Filterwirkung realisierbar ist. Insoweit umfasst die Erfindung auch Adsorptionsfilter, welche eine Mischung aus Aktivkohlepartikein umfassen, wobei die Mischung grobe und feine Anteile umfasst, wobei die Mischungsverhältnisse von groben Anteilen und feinen Anteilen sowie die Gesamtmenge der Aktivkohlepartikel derart gewählt sind, dass die Filtereigenschaften des erfindungsgemäßen Adsorptionsfilters realisiert sind.

In einer bevorzugten Ausführungsform der Erfindung weisen wenigstens 30 Gewichts-%, besonders bevorzugt mehr als 50 Gewichts-% der Aktivkohlepartikel eine Partikelgröße von kleiner als 0,180 mm auf. Damit wird die Adsorptionsgeschwindigkeit weiter erhöht, andererseits ist die Luftdurchlässigkeit noch ausreichend gut.

Sehr gute Werte hinsichtlich der Luftdurchlässigkeit werden noch mit einem Gesamtflächengewicht an Aktivkohle von 250 g/m² erzielt. Besonders gute Ergebnisse hinsichtlich der Durchbruchcharakteristik, der Luftdurchlässigkeit und der Adsorptionskapazität werden mit einem Gesamtflächengewicht an Aktivkohle zwischen 150 und 230 g/m² erzielt.

Vorzugsweise sind die Aktivkohlepartikel an ein Trägermaterial aus Vliesstoff gebunden bzw. in ein solches eingebunden. Die Techniken hierzu sind bekannt und in der Patentliteratur vielfach beschrieben.

Der Adsorptionsfilter könnte insbesondere in einem Kombifilter der eingangs genannten Art Verwendung finden, welcher einen partikelfilternden Bereich, beispielsweise einen Partikelfilter aus Vliesstoff, der elektrostatisch aufgeladen sein kann, und einen Schadstoffe adsorbierenden Bereich umfasst.

Der Adsorptionsfilter kann auch in Kombination mit mehreren Partikelfiltern und/ oder weiteren Adsorptionsfiltern, die beispielsweise jeweils auf spezifische Schadstoffe gerichtet sein können und unterschiedliche Adsorbenzien aufweisen können, eingesetzt werden. Die Aktivkohlepartikel und/ oder die in Kombination mit dem Adsorptionsfilter verwendeten Adsorbenzien können in an sich bekannter Weise teilweise oder insgesamt sauer, katalytisch oder basisch ausgerüstet sein.

Der Adsorptionsfilter kann die gleiche Geometrie wie herkömmliche Filter aufweisen, beispielsweise als Plattenfilter oder Zick-Zack-Filter ausgebildet sein.

Denkbar ist auch, dass der Adsorptionsfilter als Filterpatrone ausgebildet ist. Diese Ausgestaltung ermöglicht eine kompakte Anordnung des Filters in einem geeigneten Gehäuse.

Der Adsorptionsfilter könnte als Atemschutzfilter ausgebildet sein. Diese Ausgestaltung ermöglicht eine Verwendung in Einrichtungen, welche lungenschädliche Stoffe einsetzen.

Der Adsorptionsfilter könnte, beispielsweise als Bestandteil eines Kombifilters, insbesondere in automatischen Kraftfahrzeug (KFZ)-Klimaanlagen, Verwendung finden. Solche Klimaanlagen zeichnen sich in zunehmendem Maße dadurch aus, dass bei hohen Schadgasbelastungen bzw. - konzentrationen die Schaltung auf Umluftbetrieb, bei welchem die Luftzufuhr von aussen gestoppt und stattdessen die Luft im Autoinnenraum umgepumpt wird, automatisch erfolgt. Hierzu sind Schadgassensoren im Lufteinlaß vorgesehen, die die Schadgasbelastung bzw. -konzentration der angesaugten Luft messen (v.a. Kohlenwasserstoffe und Stickoxide) und ein Signal an die Steuerung der Klimaanlage zum Schließen der sogenannten Umluftklappe geben. Damit wird der Eintritt hoher Schadgaskonzentrationen aus der Außenluft in den Fahrgastinnenraum verhindert. Problematisch ist hierbei, dass vom Zeitpunkt des Überschreitens der Schadgaskonzentration im Ansaugbereich und der damit verbundenen Signalabgabe des Schadgassensors bis hin zum vollständigen Schließen der Umluftklappe eine Zeitspanne von einigen Sekunden vergeht und in dieser Zeit das Schadgas in hoher Konzentration in die Klimaanlage und damit durch den Kombifilter geleitet wird. Die Gefahr des Durchbruchs von Schadgasen durch den Filter ist dabei groß. Es hat sich gezeigt, dass der erfindungsgemäße Adsorptionsfilter eine so hohe Spontanadsorptionsleistung aufweist, dass selbst bei hohen Schadgaskonzentrationen ein Durchbruch von Schadgasen in den Fahrzeuginnenraum während der systembedingten Umluftklappenschließzeit von einigen Sekunden weitgehend verhindert wird. Dieser Effekt erlaubt es, bei Verwendung des hier in Rede stehenden Filters Umluftklappensysteme konstruktiv stark zu vereinfachen und dadurch deren Schließverhalten zu verlangsamen. Hierdurch können erhebliche Kosten gespart werden. Andererseits reicht die Adsorptionskapazität des erfindungsgemäßen Adsorptionsfilters aus, um bei niedriger Schadgasbelastung, die noch nicht zu einem Ansprechen des Schadgassensors führt, die durchströmenden Schadgase zu adsorbieren.

Sensoren arbeiten zum Teil selektiv und erfassen nicht alle Moleküle, welche Gerüchen und Schadgasen innewohnen. Der Adsorptionsfilter könnte jedoch auch bei nicht aktiviertem Sensor alle ihn passierenden Moleküle adsorbieren und dadurch sicherstellen, dass keine unerwünschten Schadgase auftreten können.

Es können auch Maßnahmen zum Desorbieren der Schadstoffe aus dem Adsorptionsfilter vorgesehen sein, wie z. B. Aufheizen des Filters, beispielsweise durch Anströmen mit heißer Luft, oder erhöhte Anströmung des Filters, wobei die abströmende, mit den Schadgasen beladene Luft während des Desorptionsprozesses über eine Bypass-Leitung an dem Fahrzeuginnenraum vorbeigeführt werden muss.

Der Adsorptionsfilter bringt auch in Verbindung mit einer manuellen Betätigung der Umluftklappe Vorteile.

Insbesondere in Verbindung mit der Möglichkeit des Umschaltens auf Umluftbetrieb bei Schadstoffbelastungen weist der erfindungsgemäße Adsorptionsfilter trotz rein messtechnisch (nach DIN 71460/2) ermittelbarer geringerer Adsorptionskapazität, da im Praxiseinsatz bei hohen Schadgasbelastungen der Außenluft der Filter durch das Schließen der Umluftklappe "geschützt" ist und damit das Adsorbermaterial mit Schadgasen nicht belastet wird, die gleiche Filterlebensdauer wie die bekannten Filter auf. Im Umluftbetrieb kann sich der Adsorptionsfilter entweder auf der Zuluftseite der Umluftklappe befinden und wird daher bei geschlossener Umluftklappe nicht mehr von der Außenluft durchströmt, oder aber kann sich abströmseitig zur Umluftklappe befinden und im Umluftbetrieb nur noch von der Fahrzeuginnenraumluft durchströmt werden. Im Gegensatz zu den bekannten Filtern ist bei dem erfindungsgemäßen Adsorptionsfilter der Nutzen, nämlich die subjektive Geruchsreduzierung, deutlich verbessert.

Auch wenn die Eigenschaften und Vorteile des erfindungsgemäßen Adsorptionsfilters oben im Zusammenhang mit KFZ-Anwendungen beschrieben werden, so ist der erfindungsgemäße Adsorptionsfilter keineswegs auf diese Anwendungen beschränkt. Er kann in beliebigen Filteranlagen, beispielsweise auch in Klimaanlagen zur Klimatisierung von Räumen in Immobilien oder in mobilen Raumluftreinigungseinrichtungen eingesetzt werden.

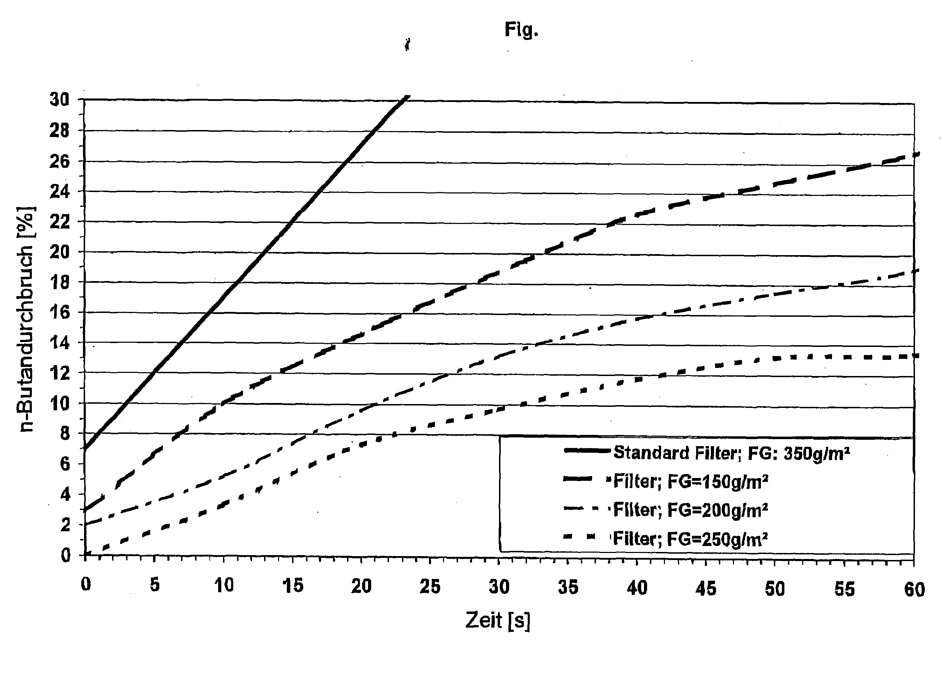

Nachfolgend wird die Erfindung anhand von Ausführungsbeispielen und der Zeichnung näher erläutert.

### Kurzbeschreibung der Zeichnung

In der Zeichnung zeigt die einzige
- Fig.: ein Diagramm, welches einen Standard Filter mit kinetisch optimierten Filtern im Hinblick auf n-Butan-Durchbruchs-Messungen vergleicht.

### Ausführung der Erfindung

### Ausführungsbeispiele:

Es wurde an drei Kombifiltern mit Adsorptionsfiltern mit unterschiedlichen Aktivkohlemengen sowie an einem im Handel erhältlichen Standard-Kombifilter-Filter der n-Butan-Durchbruch bestimmt. Die Filter waren als an sich bekannte Faltenfilter mit zick-zack-förmig gefaltetem Filtermedium, das von einem Rahmen umgeben ist, ausgebildet. Alle Filter waren aus Vliesstoff gefertigt.

Die Fertigung eines Filters unterliegt Schwankungen. Hierbei ist zu berücksichtigen, dass die tatsächliche Aufbringmenge an Aktivkohle um 20 g/m² von der Sollmenge abweichen kann. Der Anteil an Aktivkohlepartikel, deren Größe unterhalb einer bestimmten Partikelgröße liegen, kann um 10 % von der Sollmenge abweichen.

Die Messungen wurden nach der für Autoinnenraumfilter gültigen Norm DIN 71460-2 für die Adsorption von Gasen durchgeführt.

Der Aufbau der Filter im Einzelnen war wie folgt:

Die Kombifilter wiesen einen einlagigen Partikelfilter aus Polypropylen (PP) auf. Das Flächengewicht des Partikeifilters betrug 60 g/m² , das Filtermaterial war elektrostatisch aufgeladen. Der Faserdurchmesser lag bei 20 - 40 µm.

Der chemische Filterbereich umfasste ein Trägermaterial aus Polyester (PES) mit einem Flächengewicht von ca. 43 g/m² und einem Faserdurchmesser von ca. 10 bis 25 µm. Dieses war mit körniger Aktivkohle beladen. Die Flächengewichte betrugen 150, 200 und 250 g/m². Die Partikelgrößen betrugen 0,106 bis 0,425 mm. Bei dieser Partikelgrößenverteilung sind mehr als 40 Gewichts-% der Partikel kleiner als 0,180 mm.

Der zum Vergleich herangezogene Standard-Kombifilter wies einen 1-lagigen Partikelfilter mit einer Filterlage aus Polypropylen(PP) mit elektrostatischer Aufladung, einem Flächengewicht von 60 g/m² und einem Faserdurchmesser von ca. 30 µm auf.

Der chemische Filterbereich umfasste körnige Aktivkohle (0,25 - 0,6 mm) mit einem Flächengewicht von 350 g/m². Diese war auf einen Träger aus PES mit einem Flächengewicht von ca. 50g/m² aufgebracht. Die Partikelgröße betrug 0,25 bis 0,6 mm. Bei dieser Partikelgröße sind nur ca. 1 Gewichts-% der Partikel kleiner als 0,180 mm.

Das Ergebnis der Messungen ist in der einzigen Fig. der Zeichnung dargestellt.

Das Diagramm der Fig. stellt Messwerte dar, welche bei n-Butandurchbruchsmessungen unter Verwendung von vier verschiedenen Filtern erfasst wurden. Die Versuche wurden mit Luft von 23° Celsius und 50% relativer Feuchte gefahren. Der Durchsatz betrug 180 m³ / h. Die Luft war mit 80 ppm n-Butan beladen.

Man erkennt im Diagramm der Fig., dass bei dem Standard-Kombi-Filter ein Sofortdurchbruch in der Größenordnung von ca. 7 % zu verzeichnen ist. Dieser kann durch Erhöhung der Gesamtmenge an Aktivkohle zwar etwas reduziert, aber nicht völlig beseitigt werden, da aufgrund des zunehmenden Druckverlusts die Aktivkohlemenge nicht beliebig erhöht werden kann.

Bei den hier in Rede stehenden Kombifiltern liegt der Sofortdurchbruch abhängig von der Aktivkohlemenge wesentlich niedriger, nämlich bei 2 und 3 % bei einer Aktivkohlemenge von 150 bzw. 200 g/m² und erreicht sogar den Wert 0 bei 250 g/m². Weiterhin fällt auf, dass der Anstieg des Durchbruchs bei den Standardfiltern wesentlich steiler ist als bei den hier in Rede stehenden Adsorptionsfiltern. Nach einer für das Schließen einer Umluftklappe angenommenen Maximalzeitspanne von 10 sec liegt der Wert für den n-Butan-Durchbruch für den Standardfilter mit 17 % bereits relativ hoch, für die Filter mit 150, 200 und 250 g/m² Aktivkohle mit nur 10 %, 5 % und 3,5 % deutlich niedriger.

## Patentansprüche

1. Adsorptionsfilter mit wenigstens einer Schicht aus Aktivkohlepartikeln, **dadurch gekennzeichnet, dass** wenigstens 20 % der Aktivkohlepartikel eine Partikelgröße von weniger als 0,180 mm aufweisen und das Gesamtflächengewicht an Aktivkohle zwischen 100 und 500 g/m² beträgt.

2. Adsorptionsfilter nach Anspruch 1, **dadurch gekennzeichnet, dass** wenigstens 30 % der Aktivkohlepartikel eine Partikelgröße von weniger als 0,180 mm aufweisen

3. Adsorptionsfilter nach Anspruch 1 oder 2, **dadurch gekennzeichnet, dass** das Gesamtflächengewicht an Aktivkohle zwischen 150 und 230 g/m² beträgt.

4. Adsorptionsfilter nach einem der Ansprüche 1 bis 3, **dadurch gekennzeichnet, dass** das Trägermaterial für die Aktivkohle Vliesstoff umfasst.

5. Kombifilter umfassend einen Adsorptionsfilter nach einem der Ansprüche 1 bis 4.

6. Kombifilter nach Anspruch 5, **dadurch gekennzeichnet, dass** das Material für den partikelfilternden Bereich des Kombifilters Vliesstoff umfasst.
